# EUROPEAN PATENT SPECIFICATION

(11) **EP 3 889 904 B1**
(45) Date of publication and mention of the grant of the patent: **11.01.2023**
(21) Application number: 20167186.4
(22) Date of filing: 31.03.2020
(51) Int. Cl.: G06T 7/60, G06T 7/73, B60D 1/24, B60D 1/62

(54) **METHOD AND SYSTEM FOR CALCULATING VEHICLE TRAILER ANGLE**
VERFAHREN UND SYSTEM ZUR BERECHNUNG DES FAHRZEUGANHÄNGERWINKELS
PROCÉDÉ ET SYSTÈME DE CALCUL D'ANGLE DE REMORQUE DE VÉHICULE

(43) Date of publication of application: 06.10.2021
(73) Proprietor: Continental Autonomous Mobility Germany GmbH, 85057 Ingolstadt (DE)
(72) Inventor: Plowman, Robin - c/o Conti Temic microelectronic GmbH, 90411 Nürnberg (DE); Riley, Tom - c/o Conti Temic microelectronic GmbH, 90411 Nürnberg (DE)
(74) Representative: Continental Corporation

(56) References cited:
- EP-A1- 3 537 382
- EP-A1- 3 552 926
- WO-A1-2019/166065
- WO-A1-2019/170469
- CN-U- 208 282 792
- Christopher Charles De Saxe: "Vision-based trailer pose estimation for articulated vehicles", , 8 November 2017 (2017-11-08), XP055517775, DOI: 10.17863/CAM.14370 Retrieved from the Internet: URL:https://www.repository.cam.ac.uk/bitst ream/handle/1810/268169/deSaxe-2017-PhD.pd f?sequence=1&isAllowed=y [retrieved on 2018-10-22]

## Description

The present invention relates generally to the field of vehicle assistance systems. More specifically, the present invention relates to a method and a system for calculating yaw angle of a trailer coupled with a towing vehicle based on image information provided by a camera of the vehicle. Methods for calculating the angle of a trailer with respect to the towing vehicle based on image information provided by a camera of the vehicle are already known. EP 3 552 926 A1 and WO 2019/170469 A1 are some examples of such methods.

Specifically, methods are known which have low computational complexity but do not provide robust angle information in case of poor-quality images.

It is an objective of the embodiments of the invention to provide a method for calculating yaw angle of a trailer with high robustness and high reliability, which does not require knowledge of the location of the towball. The objective is solved by the features of the independent claims. Preferred embodiments are given in the dependent claims. If not explicitly indicated otherwise, embodiments of the invention can be freely combined with each other.

According to an aspect, the invention refers to a method for determining the yaw angle of a trailer with respect to the longitudinal axis of a towing vehicle. The method comprises the following steps:
First, at least a first and a second image of the trailer is captured using a camera. The first and second image is captured such that the orientation of the trailer with respect to the vehicle is different on the at least two images.

After capturing said images, at least a first and a second feature of the trailer is determined. Said first and second feature has to be visible on first and second image. In addition, said first feature is arranged at a different position of the trailer than the second feature. For example, the first feature may be a conspicuous first characteristic at a first location and the second feature may be a conspicuous second characteristic at a second location.

Based on said determined first and second feature, a first angle estimation is calculated. The first angle estimation characterizes the pivot angle in a horizontal plane between the first feature on the first image and the first feature on the second image with respect to a fix point of the towing vehicle. In other words, the first angle estimation refers to a pivot angle which is confined between a first line which runs between the position of the first feature on the first image and the position of said fix point and a second line which runs between the position of the first feature on the second image and the position of said fix point. Said pivot angle opens from the vehicle towards the trailer.

In addition, a second angle estimation is calculated. The second angle estimation characterizes the pivot angle in a horizontal plane between the second feature on the first image and the second feature on the second image with respect to the fix point of the towing vehicle. In other words, the second angle estimation refers to a pivot angle which is confined between a first line which runs between the position of second feature on the first image and the position of said fix point and a second line which runs between the position of second feature on second image and the position of said fix point. Said pivot angle opens from the vehicle towards the trailer.

It is worth mentioning that the term "position of the first/second feature on the first/second image" does not refer to a point on said image but to a certain location in the surrounding of the towing vehicle at which the respective trailer feature is located at a certain point of time at which the image is captured.

Finally, the yaw angle of the trailer is calculated based on said first and second angle estimations.

Said method is advantageous because due to using two or more images and using two or more trailer features for calculating the yaw angle, the results of yaw angle determination are very reliable and robust even when the detection of trailer features suffers from high noise or the quality of the images is poor.

Other methods which may account for the location of the fix point often require triangulating the location of features to produce an accurate angle. This makes them susceptible to noise or inaccuracies in the features being tracked. If these features are inaccurate, such methods may become mathematically unstable or produce no result at all.

According to an embodiment, on first or second image, the yaw angle of the trailer with respect to the vehicle is zero. Thereby, said image can be used as "zero-pose image", i.e. as a reference of an exact alignment of the longitudinal axis of the vehicle with the longitudinal axis of the trailer. However, also another yaw angle value can be used as reference value. If said other yaw angle is not known, the system can calculate the change in trailer angle, rather than an absolute trailer angle.

According to an embodiment, said fix point is the position of the camera or the position of the towball. Because of capturing the images by means of the camera, using the camera as the fix point is technically simple. However, using the towball as fix point may be more exact. So, information included in the images captured by the camera could be transformed in order to mitigate loss of accuracy by using the location of the fix point, e.g. the towball, to adjust the optical rays accordingly. However, if the towball is relatively close to the camera and the trailer features are relatively far away, the proposed method can calculate a trailer angle which is sufficiently accurate for an automated trailer reversing system without adjusting for the towball location. The proposed method may lead to improved results if the towball is close to the location of the camera (e.g. less than 0.3m in horizontal direction), whilst trailer features are 2m or more away in the horizontal direction.

According to an embodiment, calculating first and second angle estimations comprises determining optical rays between said fix point and said first and second feature at first and second image. Said optical rays refer to lines which run between said fix point and said first and second features. Based on said optical rays, the current pivot angle can be determined with reduced computational effort, e.g. based on geometrical methods.

According to an embodiment, camera calibration information is used for converting the position of said first and/or second feature into optical rays. For example, having knowledge of camera position using camera calibration information, the position of a certain feature on the image can be transferred in location information depending on or being correlated with the position of the camera.

According to an embodiment, in addition to said first and second feature, at least one further feature of the trailer is used for calculating the yaw angle. Using three or more features further increases the robustness and reliability of yaw angle determination.

According to an embodiment, the yaw angle is calculated by establishing the median value based on the at least two angle estimations. Thereby, a very stable yaw angle determination can be obtained.

According to other embodiments, the yaw angle is calculated by establishing an average value of the at least two angle estimations or by using a statistical approach applied to said angle estimations.

According to an embodiment, the method further comprises the step of determining an angle window. Said angle window may comprise an upper and a lower bound around said yaw angle. In addition, a set of features is determined, said features within said set of features leading to angle estimations which are located within said angle window. Said determined set of features, preferably, only features included in said set of features are used for future yaw angle calculations. So, in other words, information of previous yaw angle determinations is used to determine two or more features of the trailer which lead to angle estimations quite close to determined yaw angle (i.e. within the angle window) and to not track those features which lead to angle estimations significantly deviating from determined yaw angle (i.e. out of the angle window). Thereby, the computational complexity and accuracy of angle estimation can be significantly reduced.

According to an embodiment, the value of calculated yaw angle is increased by a certain portion or percentage in order to remedy underestimations. For example, the calculated yaw angle may be scaled up by 5% to 15%, specifically 10% in order to remedy an underestimate of calculation result.

According to an embodiment, the camera is the rear view camera of the vehicle. Based on the rear view camera, images of the trailer can be captured with reduced technical effort.

According to a further aspect, a system for determining the yaw angle of a trailer with respect to the longitudinal axis of a towing vehicle is disclosed. The system comprises a camera for capturing images of the trailer and a processing entity for processing said captured images. The system is further configured to execute the steps of:
- capturing at least a first and a second image of the trailer using a camera, the orientation of the trailer with respect to the vehicle being different on the at least two images;
- determining at least a first and a second feature of the trailer which are visible on first and second image, wherein said first and second feature is arranged at different positions of the trailer;
- calculating a first angle estimation, the first angle estimation characterizing the pivot angle in a horizontal plane between the first feature on the first image and the first feature on the second image with respect to a fix point of the towing vehicle;
- calculating a second angle estimation, the second angle estimation characterizing the pivot angle in a horizontal plane between the second feature on the first image and the second feature on the second image with respect to the fix point of the towing vehicle; and
- calculating the yaw angle based on said first and second angle estimations.

Any upper-mentioned feature described as an embodiment of the method is also applicable as a system feature in a system according to the present disclosure.

According to yet another embodiment, a vehicle comprising a system according to anyone of upper-mentioned embodiments is disclosed.

The term "vehicle" as used in the present disclosure may refer to a car, truck, bus, train or any other crafts.

The term "yaw angle" as used in the present disclosure may refer to a pivot angle between the longitudinal axis of the vehicle and the longitudinal axis of the trailer.

The term "median" as used in the present disclosure may refer to a value separating a higher half from a lower half of a data sample or a probability distribution.

The term "essentially" or "approximately" as used in the invention means deviations from the exact value by +/- 10%, preferably by +/- 5% and/or deviations in the form of changes that are insignificant for the function and/or for the traffic laws.

Various aspects of the invention, including its particular features and advantages, will be readily understood from the following detailed description and the accompanying drawings, in which:
Fig. 1 shows an exemplary top view on a vehicle towing a trailer;
Fig. 2 schematically illustrates angle estimations based on a first and a second feature captured by camera images in different pivot angles between the trailer and the towing vehicle;
Fig. 3 shows a schematic block diagram illustrating the steps of a method for determining the yaw angle of a trailer with respect to the longitudinal axis of a towing vehicle.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

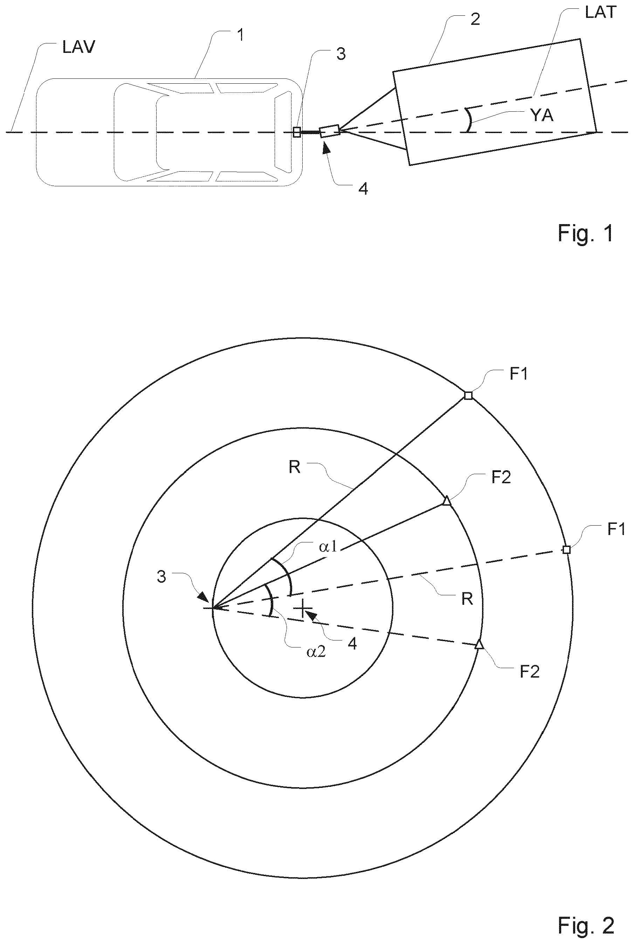

Fig. 1 shows a top view illustration of a vehicle 1 towing a trailer 2. The vehicle 1 comprises a longitudinal axis LAV which runs through the centre of the vehicle 1. Similarly, the trailer 2 comprises a longitudinal axis LAT which runs through the centre of the trailer 2. The trailer 2 is coupled with the vehicle 1 by means of a trailer hitch comprising a towball 4.

In certain driving situations, the longitudinal axis LAV of the vehicle and the longitudinal axis LAT of the trailer may not be aligned in parallel or may not fall into one another but the axes may confine a yaw angle YA. In other words, the yaw angle YA defines the angular deviation of the longitudinal axis LAT of the trailer 2 with respect to the longitudinal axis LAV of the vehicle 1. The yaw angle YA may be measured in a horizontal plane which includes the longitudinal axis LAT of the trailer 2 as well as the longitudinal axis LAV of the vehicle 1.

The knowledge of yaw angle YA is - inter alia - advantageous in trailer assistance systems, for example.

For determining the yaw angle YA, multiple images of at least a portion of the trailer 2 are captured by means of a camera 3. The camera 3 may be, for example, a rear view camera of the vehicle, which may be also used for capturing images of the surroundings of the car when driving backwards.

Fig. 2 shows a schematic diagram showing the angular relationship of a first and a second feature F1, F2 of the trailer at different points of time at which the trailer 2 has a different yaw angle with respect to the towing vehicle 1.

The camera 3 may capture two or more images at different points of time at which the angular position of the trailer 2 with respect to the vehicle 1 is different. For example, an image series may be captured.

In the present example, the second image may show an orientation of the trailer 2 with respect to the vehicle at a yaw angle YA = 0°. However, according to other embodiments, the yaw angle YA may be any other reference yaw angle which is known in advance and which can be used for determining the current yaw angle.

Features on the trailer are located and matched using a feature detection and matching algorithm. For example, the Harris Corner Detector, Scale-Invariant Feature Transform (SIFT) algorithm, Speeded Up Robust Features (SURF) algorithm, Binary Robust Invariant Scalable Keypoints (BRISK) algorithm, Binary Robust Independent Elementary Features (BRIEF), Oriented FAST and rotated BRIEF (ORB) algorithm or another suitable feature detection and matching algorithm could be used.

The feature detection and matching algorithm may detect image features that are on the trailer or not on the trailer. To segment the trailer features from the non-trailer features a number of different methods could be used. For instance, when driving forwards in a straight line, trailer features can be segmented from non-trailer features by looking for features that remain in the same position over time. Alternatively, the motion of background features can be modelled over time using the vehicle's known motion. This could be extracted from CAN data regarding speed and steering. Features which do not fit the Epipolar constraint of the Essential Matrix could then be considered as trailer features.

On the images captured by the camera 3, multiple different features may be identifiable. In Fig. 2, features F1 and F2 are illustrated which are identified at different angular positions with respect to a fix point of the vehicle 1. So the upper pair of first and second feature F1, F2 (associated with the solid optical rays connecting the features F1 and F2 with the camera 3) are identified in a first image, the lower pair of first and second feature F1, F2 (associated with dashed optical rays connecting the features F1 and F2 with the camera 3) are identified in a second image at a different point of time. For determining the optical rays connecting the features F1 and F2 with the camera 3, calibration information of the camera 3 may be used to transform the location of features in image coordinates into optical rays. In other words, for associating camera position and feature positions, the location of features on the image is concatenated with a position of a fix point of the vehicle based on calibration information of the camera 3.

After determining the optical rays R between the fix point and the at least two features in first and second image, the pivot angle of first feature and second feature is determined. In Fig. 2, α1 illustrates the pivot angle of first feature F1 between the two captured images and α2 illustrates the pivot angle of second feature F2 between said images. Preferably, more than two features of the trailer are determined and tracked over multiple images. In addition, preferably, more than two images are captured at different points of time in order to enhance the result of yaw angle estimation.

After determining said pivot angles α1, α2, the yaw angle YA can be calculated based on said pivot angles α1, α2. The yaw angle YA can be developed in different ways:
According to a first embodiment, the yaw angle YA may be calculated as being the median of said developed pivot angles α1, α2. According to another embodiment, the yaw angle YA may be determined by calculating the arithmetical mean of developed pivot angles α1, α2. According to yet another embodiment, the yaw angle YA may be determined by using a stochastic approach. For instance, the variance of each features angle could be measured, and only features with a low variance could be used for deriving the median.

The yaw angle YA could be further refined by a Kalman filter or dynamic model based on the vehicles speed and steering information. The speed and steering could be derived from CAN data or using visual methods which process the image data, for instance.

One advantage of the using the median is that the method is extremely robust. In poor lighting conditions a median will continue to produce a reliable and consistent angle estimate even if there is only one feature being tracked. The median is also very robust to outliers, which may occur if the feature tracking is poor or the image is particularly cluttered.

It appeared that not all features visible on the captured images are equally suitable for calculating yaw angle YA. In order to reduce computational complexity and robustness, those features are selected and further used for determining yaw angle, which provide pivot angles quite close to actual yaw angle. For feature selection, only those features may be tracked in future images which provided pivot angles α1, α2 in a certain window around the actual yaw angle. For example, the window may be defined by an upper and a lower boundary, said upper and lower boundary defining an angular window around said actual yaw angle. For example, the window may span over a distance of 2° to 10°, more particular between 3° and 5°. All features which led to pivot angles within said window in the last two or more yaw angle determination steps are further tracked in the next captured images.

In addition, in case that the calculated yaw angle YA is estimated too low in comparison to actual yaw angle YA, the calculated yaw angle YA can be scaled up for a certain portion or percentage in order to mitigate said underestimate.

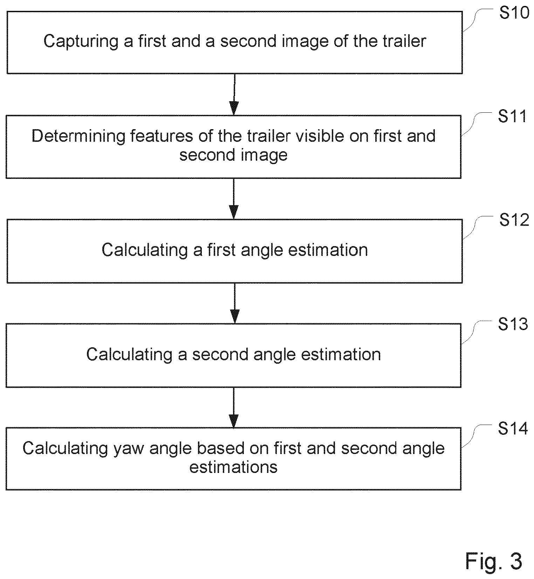

Fig. 3 shows a block diagram illustrating the method steps of a method for determining the yaw angle YA of a trailer 2 with respect to the longitudinal axis LAV of a towing vehicle 1.

As a first step, a first and a second image of the trailer is captured (S10). After image capturing, features of the trailer visible on the first and the second image are determined (S11).

After feature determination, a first and a second angle estimation is calculated based on determined first and second feature (S12, S13). Finally, the yaw angle is calculated based on first and second angle estimations (S14).

It should be noted that the description and drawings merely illustrate the principles of the proposed invention. Those skilled in the art will be able to implement various arrangements that, although not explicitly described or shown herein, embody the principles of the invention, the scope of the invention being given by the appending claims.

### List of reference numerals

- 1: vehicle
- 2: trailer
- 3: camera
- 4: towball

- *α*1: first angle estimation
- *α*2: second angle estimation
- F1: first feature
- F2: second feature
- LAT: longitudinal axis of trailer
- LAV: longitudinal axis of vehicle
- R: optical ray
- YA: yaw angle

## Claims

1. Method for determining the yaw angle (YA) of a trailer (2) with respect to the longitudinal axis (LAV) of a towing vehicle (1), the method comprising the steps of:
- capturing at least a first and a second image of the trailer (2) using a camera (3), the orientation of the trailer (2) with respect to the vehicle (1) being different on the at least two images (S10);
- determining at least a first and a second feature (F1, F2) of the trailer (2) which are visible on first and second image, wherein said first and second features (F1, F2) are arranged at different positions of the trailer (2) (S11);
- calculating a first angle estimation (α1), the first angle estimation (α1) characterizing the pivot angle in a horizontal plane between the first feature (F1) on the first image and the first feature (F1) on the second image with respect to a fix point of the towing vehicle (1) (S12);
- calculating a second angle estimation (α2), the second angle estimation (α2) characterizing the pivot angle in a horizontal plane between the second feature (F2) on the first image and the second feature (F2) on the second image with respect to the fix point of the towing vehicle (1) (S13);
- calculating the yaw angle (YA) based on said first and second angle estimations (α1, α2) (S14).

2. Method according to claim 1, wherein on first or second image, the yaw angle (YA) of the trailer (2) with respect to the vehicle (1) is zero or any known yaw angle (YA) which can be used as reference angle.

3. Method according to claim 1 or 2, wherein said fix point is the position of the camera (3) or the position of the towball (4).

4. Method according to anyone of preceding claims, wherein calculating first and second angle estimations (α1, α2) comprises determining optical rays (R) between said fix point and said first and second feature (F1, F2) at first and second image.

5. Method according to claim 4, wherein camera calibration information is used for converting the position of said first and/or second feature (F1, F2) into optical rays.

6. Method according to anyone of preceding claims, wherein in addition to said first and second features (F1, F2), at least one further feature of the trailer (2) is used for calculating the yaw angle (YA).

7. Method according to anyone of preceding claims, wherein the yaw angle (YA) is calculated by establishing the median value based on the at least two angle estimations.

8. Method according to anyone of preceding claims, wherein the yaw angle (YA) is calculated by establishing an average value of the at least two angle estimations or by using a statistical approach applied to said angle estimations.

9. Method according to anyone of preceding claims, further comprising the step of determining an angle window, said angle window comprising an upper and a lower bound around yaw angle (YA), determining a set of features which lead to angle estimations within said angle window and using said determined set of features for future yaw angle (YA) calculations.

10. Method according to anyone of preceding claims, wherein the value of calculated yaw angle (YA) is increased by a certain portion or percentage in order to remedy underestimations.

11. Method according to anyone of the preceding claims, wherein the camera (3) is the rear view camera of the vehicle (1).

12. System for determining the yaw angle (YA) of a trailer (2) with respect to the longitudinal axis (LAV) of a towing vehicle (1), the system comprising a camera (3) for capturing images of the trailer (2) and a processing entity for processing said captured images, the system further being configured to execute the steps of:
- capturing at least a first and a second image of the trailer (2) using the camera (3), the orientation of the trailer (2) with respect to the vehicle (1) being different on the at least two images;
- determining at least a first and a second feature (F1, F2) of the trailer (2) which are visible on first and second image, wherein said first and second features (F1, F2) are arranged at different positions of the trailer (2);
- calculating a first angle estimation (α1), the first angle estimation (α1) characterizing the pivot angle in a horizontal plane between the first feature (F1) on the first image and the first feature (F1) on the second image with respect to a fix point of the towing vehicle (1);
- calculating a second angle estimation (α2), the second angle estimation (α2) characterizing the pivot angle in a horizontal plane between the second feature (F2) on the first image and the second feature (F2) on the second image with respect to the fix point of the towing vehicle (1);
- calculating the yaw angle (YA) based on said first and second angle estimations (α1, α2).

13. Vehicle comprising a system according to claim 12.

## Patentansprüche

1. Verfahren zum Bestimmen des Gierwinkels (YA) eines Anhängers (2) bezüglich der Längsachse (LAV) eines Zugfahrzeugs (1), wobei das Verfahren die folgenden Schritte umfasst:
- Erfassen zumindest eines ersten und eines zweiten Bildes des Anhängers (2) unter Verwendung einer Kamera (3), wobei die Ausrichtung des Anhängers (2) bezüglich des Fahrzeugs (1) auf den mindestens zwei Bildern (S10) unterschiedlich ist;
- Bestimmen zumindest eines ersten und eines zweiten Merkmals (F1, F2) des Anhängers (2), die auf dem ersten und dem zweiten Bild sichtbar sind, wobei das erste und das zweite Merkmal (F1, F2) an unterschiedlichen Positionen des Anhängers (2) angeordnet sind (S11);
- Berechnen einer ersten Winkelschätzung (a1), wobei die erste Winkelschätzung (a1) den Schwenkwinkel in einer horizontalen Ebene zwischen dem ersten Merkmal (F1) auf dem ersten Bild und dem ersten Merkmal (F1) auf dem zweiten Bild bezüglich eines festen Punktes des Zugfahrzeugs (1) charakterisiert (S12);
- Berechnen einer zweiten Winkelschätzung (a2), wobei die zweite Winkelschätzung (a2) den Schwenkwinkel in einer horizontalen Ebene zwischen dem zweiten Merkmal (F2) auf dem ersten Bild und dem zweiten Merkmal (F2) auf dem zweiten Bild bezüglich des festen Punktes des Zugfahrzeugs (1) charakterisiert (S13);
- Berechnen des Gierwinkels (YA) basierend auf der ersten und der zweiten Winkelschätzung (α1, α2) (S14).

2. Verfahren nach Anspruch 1, wobei auf dem ersten oder dem zweiten Bild der Gierwinkel (YA) des Anhängers (2) bezüglich des Fahrzeugs (1) null oder ein beliebiger bekannter Gierwinkel (YA) ist, der als ein Referenzwinkel verwendet werden kann.

3. Verfahren nach Anspruch 1 oder 2, wobei der feste Punkt die Position der Kamera (3) oder die Position des Kugelkopfs (4) ist.

4. Verfahren nach einem der vorhergehenden Ansprüche, wobei Berechnen einer ersten und zweiten Winkelschätzung (α1, α2) Bestimmen von optischen Strahlen (R) zwischen dem festen Punkt und dem ersten und dem zweiten Merkmal (F1, F2) am ersten und zweiten Bild umfasst.

5. Verfahren nach Anspruch 4, wobei Kamerakalibrierungsinformationen zum Umwandeln der Position des ersten und/oder des zweiten Merkmals (F1, F2) in optische Strahlen verwendet werden.

6. Verfahren nach einem der vorhergehenden Ansprüche, wobei zusätzlich zum ersten und zweiten Merkmal (F1, F2) zumindest ein weiteres Merkmal des Anhängers (2) zum Berechnen des Gierwinkels (YA) verwendet wird.

7. Verfahren nach einem der vorhergehenden Ansprüche, wobei der Gierwinkel (YA) berechnet wird durch Ermitteln eines Medianwerts basierend auf mindestens zwei Winkelschätzungen.

8. Verfahren nach einem der vorhergehenden Ansprüche, wobei der Gierwinkel (YA) berechnet wird durch Ermitteln eines durchschnittlichen Werts der mindestens zwei Winkelschätzungen oder durch Verwenden eines statistischen Ansatzes, der auf die Winkelschätzungen angewendet wird.

9. Verfahren nach einem der vorhergehenden Ansprüche, ferner umfassend den Schritt zum Bestimmen eines Winkelfensters, wobei das Winkelfenster eine obere und eine untere Grenze um den Gierwinkel (YA) umfasst, Bestimmen einer Menge von Merkmalen, die zu Winkelschätzungen innerhalb des Winkelfensters führen, und Verwenden der bestimmten Menge von Merkmalen für künftige Berechnungen des Gierwinkels (YA).

10. Verfahren nach einem der vorhergehenden Ansprüche, wobei der Wert des berechneten Gierwinkels (YA) um einen gewissen Teil oder Prozentsatz erhöht wird, um Unterschätzungen zu beheben.

11. Verfahren nach einem der vorhergehenden Ansprüche, wobei die Kamera (3) die Rückwärtssichtkamera des Fahrzeugs (1) ist.

12. System zum Bestimmen des Gierwinkels (YA) eines Anhängers (2) bezüglich der Längsachse (LAV) eines Zugfahrzeugs (1), wobei das System eine Kamera (3) zum Erfassen von Bildern des Anhängers (2) und eine Verarbeitungsentität zum Verarbeiten der erfassten Bilder umfasst, wobei das System ferner ausgelegt ist zum Ausführen der folgenden Schritte:
- Erfassen zumindest eines ersten und eines zweiten Bildes des Anhängers (2) unter Verwendung der Kamera (3), wobei die Ausrichtung des Anhängers (2) bezüglich des Fahrzeugs (1) auf den mindestens zwei Bildern unterschiedlich ist;
- Bestimmen zumindest eines ersten und eines zweiten Merkmals (F1, F2) des Anhängers (2), die auf dem ersten und dem zweiten Bild sichtbar sind, wobei das erste und das zweite Merkmal (F1, F2) an unterschiedlichen Positionen des Anhängers (2) angeordnet sind;
- Berechnen einer ersten Winkelschätzung (a1), wobei die erste Winkelschätzung (a1) den Schwenkwinkel in einer horizontalen Ebene zwischen dem ersten Merkmal (F1) auf dem ersten Bild und dem ersten Merkmal (F1) auf dem zweiten Bild bezüglich eines festen Punktes des Zugfahrzeugs (1) charakterisiert;
- Berechnen einer zweiten Winkelschätzung (a2), wobei die zweite Winkelschätzung (a2) den Schwenkwinkel in einer horizontalen Ebene zwischen dem zweiten Merkmal (F2) auf dem ersten Bild und dem zweiten Merkmal (F2) auf dem zweiten Bild bezüglich des festen Punktes des Zugfahrzeugs (1) charakterisiert;
- Berechnen des Gierwinkels (YA) basierend auf der ersten und der zweiten Winkelschätzung (α1, α2).

13. Fahrzeug, umfassend ein System nach Anspruch 12.

## Revendications

1. Procédé de détermination de l'angle de lacet (YA) d'une remorque (2) par rapport à l'axe longitudinal (LAV) d'un véhicule de remorquage (1), le procédé comprenant les étapes suivantes :
- capture au moins d'une première et d'une deuxième image de la remorque (2) au moyen d'une caméra (3), l'orientation de la remorque (2) par rapport au véhicule (1) étant différente sur les au moins deux images (S10) ;
- détermination au moins d'une première et d'une deuxième caractéristique (F1, F2) de la remorque (2) qui sont visibles sur la première et la deuxième image, lesdites première et deuxième caractéristiques (F1, F2) étant agencées en des positions différentes sur la remorque (2) (S11) ;
- calcul d'une première estimation d'angle (a1), la première estimation d'angle (a1) caractérisant l'angle de pivot dans un plan horizontal entre la première caractéristique (F1) sur la première image et la première caractéristique (F1) sur la deuxième image par rapport à un point fixe du véhicule de remorquage (1) (S12) ;
- calcul d'une deuxième estimation d'angle (a2), la deuxième estimation d'angle (a2) caractérisant l'angle de pivot dans un plan horizontal entre la deuxième caractéristique (F2) sur la première image et la deuxième caractéristique (F2) sur la deuxième image par rapport au point fixe du véhicule de remorquage (1) (S13) ;
- calcul de l'angle de lacet (YA) sur la base desdites première et deuxième estimations d'angle (α1, α2) (S14).

2. Procédé selon la revendication 1, dans lequel, sur la première ou la deuxième image, l'angle de lacet (YA) de la remorque (2) par rapport au véhicule (1) est nul ou tout angle de lacet connu (YA) susceptible d'être utilisé comme angle de référence.

3. Procédé selon la revendication 1 ou 2, dans lequel ledit point fixe est la position de la caméra (3) ou la position de la boule d'attelage (4).

4. Procédé selon l'une quelconque des revendications précédentes, dans lequel le calcul de première et deuxièmes estimations d'angle α1, α2) comprend la détermination de rayons optiques (R) entre ledit point fixe et ladite première et ladite deuxième caractéristique (F1, F2) au niveau de ladite première et ladite deuxième image.

5. Procédé selon la revendication 4, dans lequel des informations de calibrage de caméra sont utilisées pour convertir la position de ladite première et/ou de ladite deuxième caractéristique (F1, F2) en rayons optiques.

6. Procédé selon l'une quelconque des revendications précédentes, dans lequel, outre lesdites première et deuxième caractéristiques (F1, F2), au moins une caractéristique supplémentaire de la remorque (2) est utilisée pour le calcul de l'angle de lacet (YA).

7. Procédé selon l'une quelconque des revendications précédentes, dans lequel l'angle de lacet (YA) est calculé en établissant la valeur médiane sur la base des au moins deux estimations d'angle.

8. Procédé selon l'une quelconque des revendications précédentes, dans lequel l'angle de lacet (YA) est calculé en établissant une valeur moyenne des au moins deux estimations d'angle ou en utilisant une approche statistique appliquée auxdites estimations d'angle.

9. Procédé selon l'une quelconque des revendications précédentes, comprenant en outre l'étape de détermination d'une fenêtre angulaire, ladite fenêtre angulaire comprenant une borne supérieure et une borne inférieure autour de l'angle de lacet (YA), de détermination d'un ensemble de caractéristiques qui mènent à des estimations d'angle au sein de ladite fenêtre angulaire et d'utilisation dudit ensemble de caractéristiques déterminé pour des calculs futurs de l'angle de lacet (YA).

10. Procédé selon l'une quelconque des revendications précédentes, dans lequel la valeur de l'angle de lacet (YA) calculé est augmentée d'une certaine quantité ou d'un certain pourcentage de manière à pallier les sousestimations.

11. Procédé selon l'une quelconque des revendications précédentes, dans lequel la caméra (3) est la caméra de vision arrière du véhicule (1).

12. Système de détermination de l'angle de lacet (YA) d'une remorque (2) par rapport à l'axe longitudinal (LAV) d'un véhicule de remorquage (1), le système comprenant une caméra (3) pour la capture d'images de la remorque (2) et une entité de traitement pour le traitement desdites images capturées, le système étant en outre configuré pour exécuter les étapes suivantes :
- capture au moins d'une première et d'une deuxième image de la remorque (2) au moyen de la caméra (3), l'orientation de la remorque (2) par rapport au véhicule (1) étant différente sur les au moins deux images ;
- détermination au moins d'une première et d'une deuxième caractéristique (F1, F2) de la remorque (2) qui sont visibles sur la première et la deuxième image, lesdites première et deuxième caractéristiques (F1, F2) étant agencées en des positions différentes de la remorque (2) ;
- calcul d'une première estimation d'angle (a1), la première estimation d'angle (a1) caractérisant l'angle de pivot dans un plan horizontal entre la première caractéristique (F1) sur la première image et la première caractéristique (F1) sur la deuxième image par rapport à un point fixe du véhicule de remorquage (1) ;
- calcul d'une deuxième estimation d'angle (a2), la deuxième estimation d'angle (a2) caractérisant l'angle de pivot dans un plan horizontal entre la deuxième caractéristique (F2) sur la première image et la deuxième caractéristique (F2) sur la deuxième image par rapport au point fixe du véhicule de remorquage (1) ;
- calcul de l'angle de lacet (YA) sur la base desdites première et deuxième estimations d'angle (α1, α2).

13. Véhicule comprenant un système selon la revendication 12.
